# EUROPEAN PATENT APPLICATION

(11) **EP 4 642 003 A1**
(43) Date of publication of application: **29.10.2025**
(21) Application number: 24171585.3
(22) Date of filing: 22.04.2024
(51) Int. Cl.: H04L 47/122, H04L 47/35, H04L 47/11, H04L 47/125

(54) **CASCADE CONGESTION MITIGATION**

(71) Applicant: Huawei Technologies Co., Ltd., Shenzhen, Guangdong 518129 (CN)
(72) Inventor: MARTIN, Sébastien, 80992 Munich (DE); MEDAGLIANI, Paolo, 80992 Munich (DE); LEGUAY, Jérémie, 80992 Munich (DE); SHA, Li, 80992 Munich (DE); HU, Zhibo, 80992 Munich (DE)
(74) Representative: Roth, Sebastian

(57) **Abstract**

Disclosed is a method (1) of operating a provider, P, network node (2) of a segment routing, SR, network (2, 3). The method (1) comprises: receiving (11) a packet comprising SR information (4); checking (12) whether the received packet needs to be subjected to the CM; if so, checking (13) whether the SR information (4) of the received packet comprises a congestion mitigation, CM, authorization (41) of P network nodes (2) of the SR network (2, 3) to subject the received packet to CM; if so, checking (14) whether the CM authorization (41) relates to the P network node (2); and if so, subjecting (15) the received packet to the CM. This allows for cascade congestion mitigation operations while guaranteeing loop free property.

## Description

### TECHNICAL FIELD

The present disclosure relates generally to the field of packet-based network communications, and in particular to a provider network node of a segment routing network and to a method of operating the same.

### BACKGROUND ART

In traditional networking, IGP (Interior Gateway Protocol) protocols such as Open Shortest Path First (OSPF) allow routing all the Best Effort (BE) traffic over the shortest paths. Within the same network, BE traffic coexists with higher priority traffic that can be "engineered" (Traffic Engineered, TE) by the network operator in order to meet specific SLAs (Service Level Agreements) using MPLS (MultiProtocol label switching) or Segment Routing (SR), for instance. In the case of unexpected events, such as failures or traffic burst, some links may become excessively loaded by BE traffic, inducing undesirable congestions, which need to be quickly addressed. In such cases, Congestion Mitigation (CM) mechanisms are typically applied using centralized TE solutions, referred to as Tactical TE. In this case, a centralized network controller reacts and modifies routing to mitigate congestion. It can modify link weights to control shortest path routing (for BE traffic) or modify the particular route of some high priority flows (MPLS or SR policies of some high priority services).

As the interaction with a centralized controller can be too slow to guarantee a quick response or the controller may not be available, routers must be able to take decisions independently, in a distributed fashion. According to an exemplary distributed CM approach, routers may leverage SR to load balance part of the traffic away from the congested link over alternative paths by engineering traffic, i.e., by adding to the packets the sequence of segments to be followed.

Each network node first carries out a pre-computation phase in which it computes and stores in the routing table up to K alternative paths for each destination node. The alternative paths for a specific destination may be activated on-the-fly when needed. For each alternative path, the network node may also define a split ratio, used to load balance traffic, that depends on the minimum capacity of the links belonging to each alternative path. During operation mode, each node monitors the load of each adjacent link. If this load exceeds a given threshold, i.e., 70% of the link load, the CM mechanism may be activated and a portion of the traffic that depends on the measured load on the link and given split ratios defined offline, may be rerouted over the alternative paths to the destination. The CM mechanism is applied only to BE traffic, as TE traffic needs to stay on the engineered path to meet the required SLAs.

A drawback of the exemplary distributed CM approach is that routers need up-to-date information from a monitoring system to take correct actions and avoid introducing congestions in other parts of the network. In fact, if the router that applies the CM mechanism is acting blindly, as it may happen in many networks where the monitoring system is not very accurate or missing, it may reroute too much traffic on other routers and induce a CM cascade. However, as the traffic redirected by the first CM has already been engineered, it is not possible to distinguish it from regular TE traffic. It results that, potentially, the CM capability of other routers is limited to only a small portion of traffic. In addition, a second node that applies CM might send some traffic back to the first node that has applied CM, as it has no vision of the status of the other routers in the network, inducing then further congestion on it.

### SUMMARY

It is an object to overcome the above-mentioned and other drawbacks.

The foregoing and other objects are achieved by the features of the independent claims. Further implementation forms are apparent from the dependent claims, the description and the figures.

According to a first aspect, a method is provided of operating a provider, P, network node of a segment routing, SR, network. The method comprises: receiving a packet comprising SR information; checking whether the received packet needs to be subjected to the CM; if so, checking whether the SR information of the received packet comprises a congestion mitigation, CM, authorization of P network nodes of the SR network to subject the received packet to CM; if so, checking whether the CM authorization relates to the P network node; and if so, subjecting the received packet to the CM.

As used herein, segment routing (SR) may refer to a routing technique within a SR network wherein the respective packet is provided with and brings along respective SR information for source-based routing. The SR network comprises provider edge (PE) network nodes confining the SR network and providing the respective SR information. The SR information comprises a list of segments, i.e., network addresses or labels, defining a network path through the SR network to be followed by the respective packet. The SR network further comprises provider (P) network nodes performing hop-by-hop forwarding of the respective packet along its defined network path in accordance with its SR information.

As used herein, congestion mitigation (CM) may refer to an attempt of making a congestion of a network link less severe, dangerous, painful, harsh, or damaging from a performance management viewpoint. In particular, CM may be achieved by re-routing of traffic away from a congested outgoing network link of the particular network node.

The method achieves re-routing of best effort (BE) traffic around congested network links, thereby potentially reducing congestion caused by equipment failure or burst traffic in distributed routing scenarios and minimizing packet loss. However, at the same time the method avoids loops in prospective alternative paths in accordance with CM authorization (information) brought along by the respective packet. Said CM authorization (information) allows differentiating BE and TE traffic and the associated packet handling, and is indicative of the P network nodes that follow on the path and can safely apply CM as loops cannot appear. As a result, CM having a local view of the link load only may be improved without requiring explicit monitoring of alternative paths, and loops due to multiple congestion mitigations are avoided. As the CM mechanism is improved, it is also possible to minimize the packet loss due to highly loaded links, i.e. close to 100% utilization, induced by cascade congestion, unsolvable without the proposed idea.

In a possible implementation form, subjecting the received packet to the CM may comprise: determining an alternative list of segments for the received packet towards its destination Provider Edge, PE, network node; determining an alternative CM authorization defining the P network nodes of the SR network being authorized to subject the received packet to CM; replacing a list of segments of the received packet by the alternative list of segments; and replacing or supplementing the CM authorization of the received packet by the alternative CM authorization.

The alternative CM authorization (information) brought along by the respective packet avoids loop closure by prospective alternative paths of downstream P network nodes by taking the same into account.

The supplementing option enables extending a loop avoidance across more than two subsequent P network nodes.

In a possible implementation form, determining an alternative list of segments for the received packet towards its destination PE network node may comprise: obtaining the alternative list of segments from a path computation element of the SR network; or obtaining the alternative list of segments from a routing protocol executed by the P network node.

Prompting a centralized path computation element or a local routing protocol (instance) for path information achieves compatibility with standardized protocols.

In a possible implementation form, checking whether the received packet needs to be subjected to the CM may comprise: determining a first segment of the list of segments of the received packet towards its destination PE network node in the SR network; determining an outgoing network link of the P network node in accordance with a lookup of the first segment in a forwarding table of the routing protocol executed by the P network node; and determining that the received packet needs to be subjected to the CM if a utilization of the outgoing network link exceeds a predetermined threshold.

Making the CM dependent on the utilization of the outgoing network link achieves demand-driven rerouting of best-effort traffic.

As used herein, an outgoing network link may refer to a network link connecting a P network node with an adjacent P network node that constitutes a next hop along the packet's defined network path.

As used herein, the term adjacent may refer to being connected by a common network link, and thus having a potential of immediately preceding or following along a defined network path.

In a possible implementation form, subjecting the received packet to the CM may further comprise: sending a message to an adjacent P network node of the SR network. The message may comprise one or more of: the utilization of the outgoing network link in accordance with the list of segments, and a utilization of an outgoing network link in accordance with the alternative list of segments.

This signaling message, similar to a link-state advertisement (LSA), assists the decisions taken by adjacent network nodes (i.e., neighbors) doing CM by informing the same about a utilization of an alternative path as well as a link utilization.

In a possible implementation form, determining an alternative CM authorization defining the P network nodes of the SR network being authorized to subject the received packet to CM may comprise: determining, for the respective P network node of the alternative list of segments, a respective alternative list of segments towards the destination PE network node.

Considering the prospective alternative paths of the downstream network nodes achieves an awareness of potential routing loops upon repetitive rerouting.

In a possible implementation form, determining, for the respective P network node of the alternative list of segments, a respective alternative list of segments towards the destination PE network node may comprise: obtaining the respective alternative list of segments from the path computation element of the SR network; or obtaining the respective alternative list of segments from the routing protocol executed by the P network node.

Prompting a centralized path computation element or a local routing protocol (instance) for path information achieves compatibility with standardized protocols.

In a possible implementation form, the CM authorization may comprise a list of P network nodes of the SR network being authorized to subject the received packet to CM.

In a possible implementation form, the CM authorization may comprise a hop count distance to P network nodes of the SR network being authorized to subject the received packet to CM.

The different implementation options for the CM authorization (information) provide a trade-off between complexity and control precision. More specifically, the list of P network nodes specifies precisely which P network nodes do have a CM authorization, whereas in case of the less complex hop count distance to P network nodes the most distant node lacking CM authorization may prevent closer P network nodes from exercising CM authorization. The looser control of the hop count distance implementation further achieves compatibility with loose routing.

As used herein, a hop count may refer to a distance, in particular a number of network links to be traversed, between given network nodes.

In a possible implementation form, the received packet may comprise an Internet Protocol version 4, IPv4, or an Internet Protocol version 6, IPv6, encapsulated packet; and the received packet may further comprise an SR header extension.

In a possible implementation form, the SR header extension may comprise the list of segments being encoded as IPv4 or IPv6 addresses.

In a possible implementation form, the SR header extension may comprise the list of segments being encoded as compressed segment identifiers, C-SID.

The different implementations options for the packet encapsulation (here: IP-based, SRv6) achieve compatibility with various standardized network environments.

As used herein, a compressed segment identifier (C-SID) may refer to a compressed encoding of a segment in an SRv6 list of segments.

This achieves compression of the SR information brought along by the respective packet.

In a possible implementation form, the received packet may comprise a multiprotocol label switching, MPLS, encapsulated packet; the received packet may further comprise an MPLS label stack; and the MPLS label stack may comprise the list of segments being encoded as MPLS labels.

In a possible implementation form, the received packet may further comprise the CM authorization being encoded as an MPLS SR extension header.

The different implementations options for the packet encapsulation (here: MPLS-based) achieve compatibility with various standardized network environments.

According to a second aspect, a provider, P, network node of a segment routing, SR, network is provided. The P network node comprises a processor, configured to: receive a packet comprising SR information; check whether the received packet needs to be subjected to the CM; if so, check whether the SR information of the received packet comprises a congestion mitigation, CM, authorization of P network nodes of the SR network to subject the received packet to CM; if so, check whether the CM authorization relates to the P network node; and if so, subject the received packet to the CM.

The proposed P network node reduces congestion caused by equipment failure or burst traffic in distributed routing scenarios and thus minimizes packet loss by rerouting of BE traffic. At the same time, the proposed P network node avoids loops in prospective alternative paths in accordance with CM authorization (information) brought along by the respective packet.

In a possible implementation form, the processor may further be configured to: perform the method of operating a provider, P, network node of a segment routing, SR, network according to the first aspect or any of its implementations.

According to a third aspect, a computer program is provided, comprising a program code for performing the method of operating a provider, P, network node of a segment routing, SR, network according to the first aspect or any of its implementations when executed on a computer.

### BRIEF DESCRIPTION OF DRAWINGS

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates an exemplary segment routing network in accordance with the present disclosure;
- FIG. 2: illustrates a broadest implementation of a method 1 in accordance with the present disclosure;
- FIGs. 3-5: respectively illustrate details of the method 1 in accordance with the present disclosure;
- FIG. 6: illustrates an exemplary packet header in accordance with the present disclosure; and
- FIGs. 7A-D: illustrate an operation of the method 1 in accordance with the present disclosure.

### DETAILED DESCRIPTIONS OF DRAWINGS

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

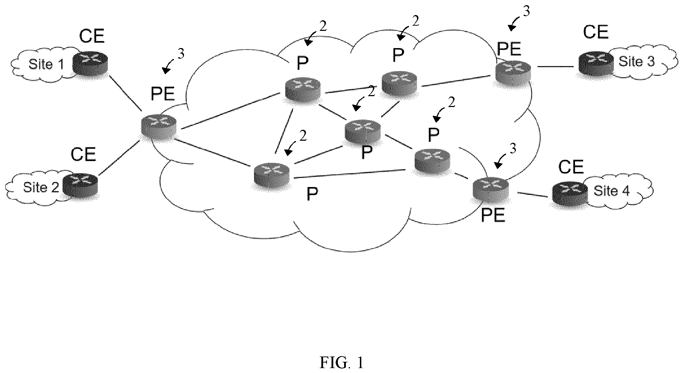

FIG. 1 illustrates an exemplary segment routing network 2, 3 in accordance with the present disclosure.

The proposed idea particularly applies to backbone IP networks, whose example is shown in FIG. 1.

Within such a network, segment routing (SR) may be deployed, wherein the respective packet is provided with and thus brings along respective SR information 4 for source-based routing between ingress and egress PE network nodes 2.

PE network nodes 3 confine the SR network 2, 3 and add the respective SR information 4 to ingress packets arriving from adjacent customer edge (CE) network nodes, and any residual SR information 4 or encapsulation is usually removed from egress packets leaving towards adjacent customer edge (CE) network nodes. The network further comprises intermediate P network nodes 2 performing hop-by-hop forwarding of the respective packet along its defined network path in accordance with its SR information 4. To this end, the SR information 4 comprises a list of segments 42, i.e., network addresses or labels depending on the concrete implementation (see FIG. for an exemplary packet header in accordance with the present disclosure). The list of segments 42 defines a network path through the SR network 2, 3 to be followed by the respective packet.

Note that P network nodes 2 and PE network nodes 3 constitute different roles / behaviors of packet routing devices (i.e., routers). For example, a network node may, at least in in principle, act as a P network node 2 for transit traffic of the SR network 2, 3 and as a PE network node 3 for ingress/egress traffic of the SR network 2, 3, depending on the considered traffic.

Despite normally a Maximum Link Utilization (MLU) does not exceed 30-40% in a backbone network, in the case of failure or traffic variations, one or several network links may become congested, i.e., the MLU may exceed a higher threshold, such as 70%, and P network nodes 2 need to quickly react locally. However, to keep network operations safe and avoid any impact on critical traffic, part of the traffic must not be re-routed. Indeed, a subset of the traffic may be already routed with specific TE policies. In case of congestion, "engineered" traffic should not change path as TE policies have been selected based on specific requirements, such as QoS assurance, which are unknown to P network nodes 2.

In both scenarios (link failures or traffic bursts), the CM mechanism applies locally inside each node which detects a congestion.

One drawback of the outlined distributed CM is that network nodes 2, 3 act independently with respect to one another, and therefore may act contradictory. For example, a first CM of a first network node and a second CM of a subsequent second network node may create congestion and/or routing loops.

Another drawback is that BE traffic that has been subjected to CM is encapsulated like TE traffic and cannot be distinguished from the same anymore, so that multiple cascade mitigations of BE traffic are impossible.

It turns out that enabling multiple cascade mitigations and ensuring, at the same time, a loop free property requires that the second network node that applies the CM mechanism cannot send traffic back to the first network node that has applied the CM previously. The first node that performs CM may add CM authorization (information) into the SR packet header corresponding to the downstream network nodes that are permitted to perform further CM so that another CM can be carried out safely, i.e., without introducing any loop with the first network node that applies the CM. In addition, as the packet contains the CM authorization (information) in the SR header, it can be recognized as different from regular TE traffic, and by consequence it can be rerouted by other downstream routers applying CM.

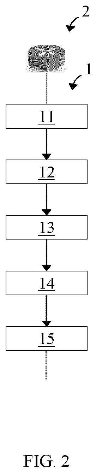

FIG. 2 illustrates a broadest implementation of a method 1 in accordance with the present disclosure.

The method 1 is suitable of operating a provider, P, network node 2 of a segment routing, SR, network 2, 3. Said P network node 2 comprises a processor which may be configured to perform the method 1.

In particular, the method 1 may particularly be used for congestion mitigation, CM, in connection with traffic bursts or link failures. More specifically, subsequent to a burst of BE traffic, subsequent to an interior gateway protocol, IGP, based rerouting around a failure of a network link of the SR network 2, 3, and/or following a Topology Independent Loop-Free Alternate, TI-LFA, Fast Rerouting, FRR around a failure of a network link of the SR network 2, 3. In the latter case, TI-LFA may be extended to avoid congestions happening on paths used for protection.

The method 1 comprises receiving 11 a packet comprising SR information 4. For example, this may include receiving an arbitrary packet and checking whether said packet comprises any SR information 4.

The method 1 further comprises checking 12 whether the received packet needs to be subjected to the CM.

The method 1 further comprises, if so, checking 13 whether the SR information 4 of the received packet comprises a congestion mitigation, CM, authorization 41 of P network nodes 2 of the SR network 2, 3 to subject the received packet to CM.

The method 1 further comprises, if so, checking 14 whether the CM authorization 41 relates to the P network node 2.

The method 1 further comprises, if so, subjecting 15 the received packet to the CM, if all of the above-identified prerequisites apply.

Note that a particular sequence of the steps of the method is only restricted by dependencies. As an example, the step of *receiving* 11 a packet comprising SR information 4 is a prerequisite for the steps 12 and 13 which respectively relate to the *received* packet, so that step 11 positively precedes steps 12 and 13. As a further example, the steps 13 - 15 respectively imply that all previous steps have been carried out successfully (*"if so,* ... "). This suggests that the actual sequence of steps 13 and 14 is at the implementers' discretion.

The CM authorization 41 information constitutes an indication of those of the downstream P network nodes 2 that are permitted to perform additional CM.

First, this indication enables distinguishing "regular" BE traffic that has not been subjected to CM (not having any SR information 4), BE traffic having been subjected to CM (having SR information 4 *with* CM authorization 41) and "regular" TE traffic (having SR information 4 *without* CM authorization 41). This way, BE traffic having been subjected to CM previously can - at least in principle - be subjected to CM over and over again.

Second, the indication of the P network nodes 2 that can safely reroute traffic prevents downstream P network nodes 2 from carrying out CM which would result in sending back traffic to the upstream P network node 2 that has applied the CM.

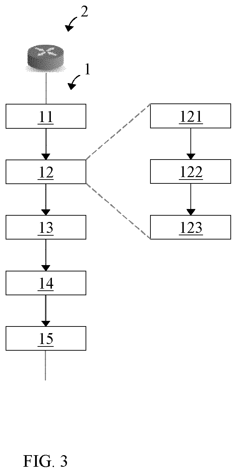

FIGs. 3-5 respectively illustrate details of the method 1 in accordance with the present disclosure.

With reference to FIG. 3, the step of checking 12 whether the received packet needs to be subjected to the CM may comprise: determining 121 a first segment of the list of segments 42 of the received packet towards its destination PE network node 3 in the SR network 2, 3; determining 122 an outgoing network link of the P network node 2 in accordance with a lookup of the first segment in a forwarding table of the routing protocol executed by the P network node 2; and determining 123 that the received packet needs to be subjected to the CM if a utilization of the outgoing network link exceeds a predetermined threshold.

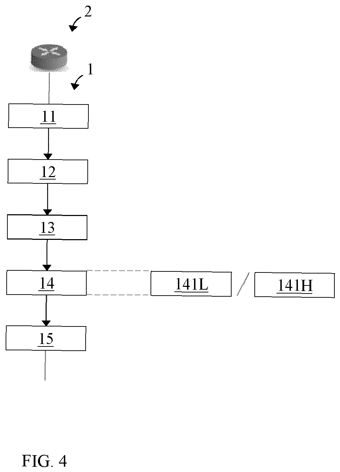

With reference to FIG. 4, it is noted that the CM authorization 41 may comprise: a list of P network nodes 2 of the SR network 2, 3 being authorized to subject the received packet to CM; or a hop count distance to P network nodes 2 of the SR network 2, 3 being authorized to subject the received packet to CM. Other data representations such as a bitmask (an array of bits respectively being indicative of a particular P network node 2) are also possible.

Thus, the step of checking 14 whether the CM authorization 41 relates to the P network node 2 may comprise: checking 141L whether the list of P network nodes 2 comprises the P network node 2; or checking 141H whether the hop count distance has a value enabling CM. For example, given that the hop count distance is decremented by each P network node 2 starting from an initial value, it may be defined that no further CM can be applied as long as the value is larger than zero.

Based on the CM authorization 41 in the form of the hop count distance, SR loose and SR-BE can be supported. In this case also P network nodes 2 that are allowed carrying out CM but not belonging to the waypoints have to be taken into account, too, when determining the CM authorization 41.

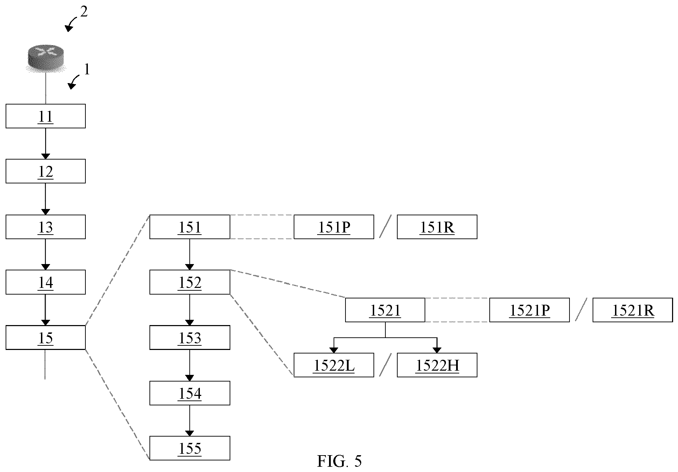

With reference to FIG. 5, the step of subjecting 15 the received packet to the CM may comprise: determining 151 an alternative list of segments (i.e., alternative path) for the received packet towards its destination Provider Edge, PE, network node 3; determining 152 an alternative CM authorization defining the P network nodes 2 of the SR network 2, 3 being authorized to subject the received packet to CM; replacing 153 a list of segments 42 (i.e., a list of segment identifiers, SIDs) of the received packet by the alternative list of segments; and replacing or supplementing 154 the CM authorization 41 of the received packet by the alternative CM authorization.

Optionally, the step of subjecting 15 the received packet to the CM may further comprise: sending 155 a message to an adjacent P network node 2 of the SR network 2, 3. The message may comprise one or more of: the utilization of the outgoing network link in accordance with the list of segments 42, and a utilization of an outgoing network link in accordance with the alternative list of segments.

The step of determining 151 an alternative list of segments for the received packet towards its destination PE network node 3 may comprise: obtaining 151P the alternative list of segments from a path computation element of the SR network 2, 3; or obtaining 151R the alternative list of segments from a routing protocol executed by the P network node 2. In particular, the routing protocol may comprise an (i.e., one) IGP of: IS-IS, and OSPF.

Note that the step of determining 151 an alternative list of segments may particularly be precomputed offline for performance reasons.

The step of determining 152 an alternative CM authorization defining the P network nodes 2 of the SR network 2, 3 being authorized to subject the received packet to CM may comprise: determining 1521, for the respective P network node 2 of the alternative list of segments, a respective alternative list of segments towards the destination PE network node 3.

The step of determining 1521, for the respective P network node 2 of the alternative list of segments, a respective alternative list of segments towards the destination PE network node 3 may comprise: obtaining 1521P the respective alternative list of segments from the path computation element of the SR network 2, 3; or obtaining 1521R the respective alternative list of segments from the routing protocol executed by the P network node 2.

Note that also the step of determining 1521 a respective alternative list of segments may particularly be precomputed offline for performance reasons. That is to say, each P network node 2 may precompute also the alternative paths for the other P network nodes 2 in the SR network 2, 3, in order to get full knowledge of potential loops that can be introduced.

The step of determining 152 an alternative CM authorization defining the P network nodes 2 of the SR network 2, 3 being authorized to subject the received packet to CM may further comprise: adding 1522L the respective P network node 2 to the list of P network nodes 2 if the respective alternative list of segments fails to traverse the P network node 2; or setting 1522H the hop count distance in accordance with a hop count from the P network node 2 to the respective P network node 2 if the respective alternative list of segments fails to traverse the P network node 2.

So once a CM is applied, the alternative list of segments replaces 153 the list of segments 42 of the received packet, and the alternative CM authorization information replaces or supplements 154 the CM authorization 41 of the received packet. The updated CM authorization 41 information is indicative of those of the downstream P network nodes 2 which are not allowed to reroute this specific flow, as otherwise loops could be created by being sent back to the first rerouting node.

A second P network node 2 that receives the packet and is running the CM checks in the header if it is allowed carrying out the packet rerouting safely. If it is allowed, i.e., if it does not appear in the list of forbidden nodes, it can apply the CM safely, otherwise it will forward the flow through the congested link.

Since the BE traffic rerouted due to CM can be distinguished from TE traffic and as loop free rerouting can be guaranteed, it is possible to handle multiple cascade congestions safely.

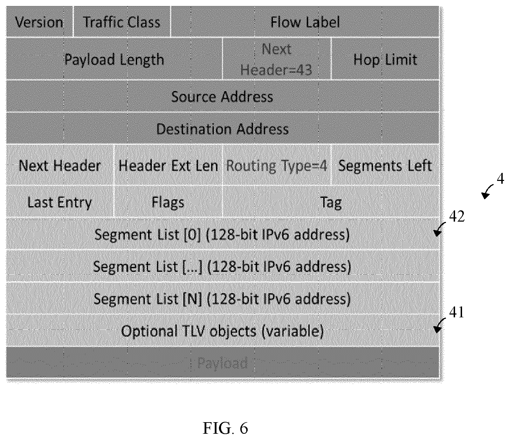

FIG. 6 illustrates an exemplary packet header in accordance with the present disclosure.

The received packet may comprise an Internet Protocol version 4, IPv4, or an Internet Protocol version 6, IPv6, encapsulated packet; and the received packet may further comprise an SR header extension for encapsulation of the SR information 4, if any.

In accordance with an SRv6 implementation, the SR header extension may comprise the list of segments 42 being encoded as IPv4 (not shown) or IPv6 addresses (see FIG. 6). Alternatively, the SR header extension may comprise the list of segments 42 being encoded as compressed segment identifiers, C-SID.

The SR header extension may further comprise the CM authorization 41 being encoded as a type-length-value, TLV, extension.

In accordance with a multiprotocol label switching, MPLS, SR implementation (not shown), the received packet may comprise an MPLS encapsulated packet and an MPLS label stack.

The MPLS label stack may comprise the list of segments 42 being encoded as MPLS labels.

The received packet may further comprise the CM authorization 41 being encoded as an MPLS SR extension header.

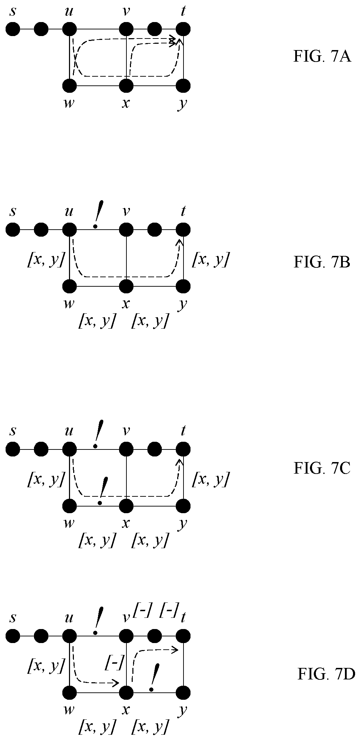

FIGs. 7A-D illustrate an operation of the method 1 in accordance with the present disclosure.

Typically, each of the P network nodes 2 pre-computes its alternative path as well as the alternative paths of the other nodes, to identify which nodes could potentially introduce loops.

In the illustrative example of FIG. 7A, the P network node 2, *u* (pre-)computes an alternative path *u-w-x-y-t* for a congestion of network link u-v, and further (pre-)computes alternative paths for downstream nodes 2, w (alternative path *w-u-v-t*), and 2, x (alternative path *x-v-t*) as well. So, whenever the link *uv* gets congested, the P network node 2, *u* sends at least a part of the BE traffic over the alternative path *u-w-x-y-t.*

As shown in FIG. 7B, as the P network node 2, *u* knows that the alternative path of downstream P network node 2, w can create a loop, only the P network nodes 2, x and 2, *y* are authorized to perform CM (i.e., allowed rerouting traffic) by inclusion in a CM authorization 42 information implemented as a list *[x, y]* of P network nodes 2 in this example.

As shown in FIG. 7C, whenever link wx gets congested due to the CM of P network node 2, *u,* the P network node 2, w cannot apply any CM on the CM traffic coming from P network node 2, *u,* as it is not present in the list *[x, y]* of P network nodes 2. Of course, it can still apply the CM on the rest of the traffic.

As shown in FIG. 7D, if the link *xy* gets congested following the CM of P network node 2, *u,* the downstream P network node 2, x can apply a further CM to the incoming CM traffic, as it appears the list *[x, y]* of P network nodes 2. It will then update the list of segments 41 in the header of the rerouted packets and update the list 42 of P network nodes 2 accordingly (here: empty list *[-]*) to avoid further loops by downstream P network nodes 2.

To summarize, the present disclosure provides:
- A CM mechanism to allow cascade congestion mitigation operations, while guaranteeing loop free property,
- Nodes apply congestion mitigation only to BE traffic,
- Nodes apply congestion mitigation only if they are allowed to do so by means of CM authorization,
- Nodes update the CM authorization as soon as they forward packets over alternative paths to notify other downstream nodes that: the traffic has been redirected due to CM, and the authorized nodes are allowed carrying out further CM,
- Before forwarding packets over alternative paths, nodes check whether they are allowed rerouting the flow type by inspecting the packet header. If the traffic is not TE, they check whether they are allowed rerouting the traffic without introducing any loop,
- The network may handle multiple failures and/or congestions (e.g., multiple TI-LFA),

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A method (1) of operating a provider, P, network node (2) of a segment routing, SR, network (2, 3), the method (1) comprising:
- receiving (11) a packet comprising SR information (4);
- checking (12) whether the received packet needs to be subjected to the CM;
- if so, checking (13) whether the SR information (4) of the received packet comprises a congestion mitigation, CM, authorization (41) of P network nodes (2) of the SR network (2, 3) to subject the received packet to CM;
- if so, checking (14) whether the CM authorization (41) relates to the P network node (2); and
- if so, subjecting (15) the received packet to the CM.

2. The method (1) of claim 1,
wherein subjecting (15) the received packet to the CM comprises:
- determining (151) an alternative list of segments for the received packet towards its destination Provider Edge, PE, network node (3);
- determining (152) an alternative CM authorization defining the P network nodes (2) of the SR network (2, 3) being authorized to subject the received packet to CM;
- replacing (153) a list of segments (42) of the received packet by the alternative list of segments; and
- replacing or supplementing (154) the CM authorization (41) of the received packet by the alternative CM authorization.

3. The method (1) of claim 2,
wherein determining (151) an alternative list of segments for the received packet towards its destination PE network node (3) comprises:
- obtaining (151P) the alternative list of segments from a path computation element of the SR network (2, 3); or
- obtaining (151R) the alternative list of segments from a routing protocol executed by the P network node (2).

4. The method (1) of any one of the claims 2 to 3,
wherein checking (12) whether the received packet needs to be subjected to the CM comprises:
- determining (121) a first segment of the list of segments (42) of the received packet towards its destination PE network node (3) in the SR network (2, 3);
- determining (122) an outgoing network link of the P network node (2) in accordance with a lookup of the first segment in a forwarding table of the routing protocol executed by the P network node (2); and
- determining (123) that the received packet needs to be subjected to the CM if a utilization of the outgoing network link exceeds a predetermined threshold.

5. The method (1) of claim 4,
wherein subjecting (15) the received packet to the CM further comprises:
- sending (155) a message to an adjacent P network node (2) of the SR network (2, 3), the message comprising one or more of:
- the utilization of the outgoing network link in accordance with the list of segments (42), and
- a utilization of an outgoing network link in accordance with the alternative list of segments.

6. The method (1) of any one of the claims 3 to 5,
wherein determining (152) an alternative CM authorization defining the P network nodes (2) of the SR network (2, 3) being authorized to subject the received packet to CM comprises:
- determining (1521), for the respective P network node (2) of the alternative list of segments, a respective alternative list of segments towards the destination PE network node (3).

7. The method (1) of claim 6,
wherein determining (1521), for the respective P network node (2) of the alternative list of segments, a respective alternative list of segments towards the destination PE network node (3) comprises:
- obtaining (1521P) the respective alternative list of segments from the path computation element of the SR network (2, 3).

8. The method (1) of claim 6,
wherein determining (1521), for the respective P network node (2) of the alternative list of segments, a respective alternative list of segments towards the destination PE network node (3) comprises:
- obtaining (1521R) the respective alternative list of segments from the routing protocol executed by the P network node (2).

9. The method (1) of any one of the claims 1 to 8,
- the CM authorization (41) comprising a list of P network nodes (2) of the SR network (2, 3) being authorized to subject the received packet to CM.

10. The method (1) of any one of the claims 1 to 8,
the CM authorization (41) comprising a hop count distance to P network nodes (2) of the SR network (2, 3) being authorized to subject the received packet to CM.

11. The method (1) of any one of the claims 1 to 10,
the received packet comprising an Internet Protocol version 4, IPv4, or an Internet Protocol version 6, IPv6, encapsulated packet;
the received packet further comprising an SR header extension.

12. The method (1) of any one of the claims 1 to 10,
the received packet comprising a multiprotocol label switching, MPLS, encapsulated packet;
the received packet further comprising an MPLS label stack; and
the MPLS label stack comprising the list of segments (42) being encoded as MPLS labels.

13. The method (1) of claim 11,
the SR header extension comprising the list of segments (42) being encoded as IPv4 or IPv6 addresses.

14. The method (1) of claim 11,
the SR header extension comprising the list of segments (42) being encoded as compressed segment identifiers, C-SID.

15. The method (1) of claim 12,
the received packet further comprising the CM authorization (41) being encoded as an MPLS SR extension header.

16. A provider, P, network node (2) of a segment routing, SR, network (2, 3), the P network node (2) comprising a processor, configured to:
- receive (11) a packet comprising SR information (4);
- check (12) whether the received packet needs to be subjected to the CM;
- if so, check (13) whether the SR information (4) of the received packet comprises a congestion mitigation, CM, authorization (41) of P network nodes (2) of the SR network (2, 3) to subject the received packet to CM;
- if so, check (14) whether the CM authorization (41) relates to the P network node (2); and
- if so, subject (15) the received packet to the CM.

17. The P network node (2) of claim 16,
the processor further configured to:
- perform the method (1) of operating a provider, P, network node (2) of a segment routing, SR, network (2, 3) according to any one of the claims 1 to 15.

18. A computer program, comprising:
a program code for performing the method (1) of operating a provider, P, network node (2) of a segment routing, SR, network (2, 3) according to any one of the claims 1 to 15 when executed on a computer.
